# EUROPEAN PATENT SPECIFICATION

(11) **EP 1 726 630 B1**
(45) Date of publication and mention of the grant of the patent: **16.11.2011**
(21) Application number: 05721085.8
(22) Date of filing: 14.03.2005
(51) Int. Cl.: C09K 11/64

(54) **ALUMINATE PHOSPHOR AND PROCESS FOR PRODUCING THE SAME**
ALUMINATLEUCHTSTOFF UND HERSTELLUNGSVERFAHREN
LUMINOPHORE D'ALUMINATE ET SON PRECÉDÉ DE PRODUCTION

(30) Priority: 19.03.2004 JP 2004080418
(43) Date of publication of application: 29.11.2006
(73) Proprietor: Chubu Chelest Co. Ltd., Abeno-ku, Osaka-shi, Osaka-fu 545-0051 (JP); Chelest Co., Ltd., Abeno-ku, Osaka-shi, Osaka 5450051 (JP); Saitoh, Hidetoshi, Nagaoka-shi Niigata 9402188 (JP)
(72) Inventor: SAITOH, Hidetoshi c/o Nagaoka University of Technology, Nagaoka-shi, Niigata 9402188 (JP); TADA, Hiromi,, Higashimatsuyama-shi ,Saitama 3550063 (JP); NAMBU, Nobuyoshi c/o Yokkaichi Works in CHUBU CHELEST CO., LTD., Yokkaichi-shi, Mie 5100886 (JP); NAKAMURA, Atsushi c/o Yokkaichi Works in CHUBU CHELEST CO., LTD., Yokkaichi-shi, Mie 5100886 (JP); ITO, Hiroshi, c/o CHELEST CORPORATION, Osaka-shi, Osaka 5450051 (JP)
(74) Representative: Müller-Boré & Partner Patentanwälte
(86) International application number: PCT/JP2005/004898
(87) International publication number: WO 2005/090513

(56) References cited:
- EP-A- 1 357 162
- JP-A- 3 002 296
- JP-A- 10 273 656
- JP-A- 60 220 548
- JP-A- 2000 063 823
- JP-A- 2003 238 955
- JP-A- 2003 292 949
- JP-A- 2003 533 852
- JP-A- 2004 224 830
- WANG D. ET AL: 'Concentration quenching of Eu2+in SrO.6A1203:Eu2+ phosphor.' JOURNAL OF MATERIALS SCIENCE. vol. 37, 2002, pages 381 - 383, XP001092501

## Description

The present invention relates to a novel aluminate phosphor capable of emitting fluorescence in a violet to blue-green region by ultraviolet (UV) excitation. Particularly, the invention relates to an UV-excited phosphor which comprises europium-activated strontium aluminate and which is capable of emitting light in a violet to blue-green region throughout a broad composition range. The invention also relates to a method for efficiently producing the phosphor by mixing metal components homogeneously using a chelating agent.

A phosphor including aluminate as a matrix is widely put in practical use as an UV-excited phosphor emitting light mainly in a blue to green region. Development of a vacuum UV-excited light emitting diode, like plasma display panels (PDPs), has been conducted actively. A vacuum UV-excited light emitting diode is excited by vacuum UV rays which are radiated by rare gas discharge to emit light. An aluminate phosphor for PDP capable of emitting light in a blue to green region has been in practical use.

Aluminate is represented by a general composition formula: xMO.yAl₂O₃, wherein M is a divalent metal (mainly, alkaline earth metals). Phosphors of various compositions are produced by introducing a plurality of divalent metals as the metal M, or doping a rare earth metal, Mn or the like as an activator to the M site. For example, a phosphor in which Ba and Mg are used as the metal M and Eu is doped as an activator at the Ba site is ascertained to emit a blue fluorescence by UV excitation.

Representative examples thereof include BaMg₂Al₁₆O₂₇: Eu disclosed in Japanese Examined Patent Publication No. Shou 52-22836, and BaMgAl₁₀O₁₇: Eu disclosed in Japanese Unexamined Patent Publication No. Hei 08-115673. A phosphor, in which the amount of Ba or Al in the BaMgAl₁₀O₁₇: Eu is increased or part of the Ba with Sr is replaced, prevents thermal degradation caused by a baking treatment (Japanese Unexamined Patent Publication No. 2000-226574). A phosphor resulting from doping Eu as an activator on aluminate of magnetoplumbite structure is also known (Japanese Unexamined Patent Publication No. 2001-240856).

For example, BaAl₁₂O₁₉: Mn and BaMgAl₁₄O23: Mn resulting from doping Mn as an activator on aluminate are UV-excited green-emitting phosphors. In order to improve emission characteristics, a lanthanum magnesium aluminate green-emitting phosphor activated with Ce or Tb is known (Japanese Unexamined Patent Publication No. Hei 06-240252). A Ce-activated (Mn-coactivated) green-emitting phosphor that is a manganese-substituted barium calcium aluminate phosphor in which a part of Ba is substituted for Zn and the remaining Ba is substituted for Sr is also of improved emission characteristics (Japanese Unexamined Patent Publication No. 2000-290647). As another phosphor, a europium-activated strontium aluminate shows blue-green color with a peak emission wavelength at 493 nm.

So-called long persistence phosphor having a long afterglow characteristic is known in aluminate phosphors. A phosphor comprising MAlO₄ (M means at least one metal element selected from Ca, Sr and Ba) as a matrix, Eu as an activator, and other rare earth elements as coactivator has a phosphorescence property (Japanese Unexamined Patent Publication No. Hei 07-11250). Other examples include a phosphor in which aluminum of an aluminate matrix is replaced by boron (B) and afterglow characteristics are improved by stabilizing its crystal (Japanese Unexamined Patent Publication No. Hei 08-73845). A phosphor comprising Sr₂Al₆O₁₁ as a matrix, to which europium as an activator or europium and dysprosium as co-activators have been added, is also known (Japanese Unexamined Patent Publication No. 2000-63823).

As mentioned above, a conventional aluminate phosphor comprises oxides including three or more sorts of metals. In a preparation of such phosphor, mixing metal components homogeneously is important.

Most of above-mentioned phosphors are produced by a classic method, namely called a solid phase method, in which a multi metal oxide is obtained by mixing solid phase raw materials in a desired metal composition ratio, followed by firing. In the solid phase method, because two or more sorts of metal oxides are mixed in a solid phase state, the resultant is apparently in a heterogeneous phase in a microscopic view no matter how the metal oxides are intended to be mixed homogeneously. No matter how skillfully the metal composition ratio or the amount of metal elements doped is controlled, or even if the composition ratio of metal components included in each particle is controlled as desired, it is theoretically impossible to produce a phosphor having a completely homogeneous metal distribution in each particle.

In order to produce a phosphor of homogeneous multi metal oxide or aluminate composed of a plurality of metal oxides like that mentioned above, it is necessary to prepare a precursor of homogeneous multi metal composition. Further, a preparation of such a homogeneous precursor requires synthesis in a homogeneous state from raw materials. A liquid phase method based on a chemical process, as exemplified by sol-gel method or coprecipitation method, is known to be capable of preparing a phosphor of homogeneous multi metal oxide. However, in such a conventional liquid phase method, production cost is high and producing operations are very complicated. Further, it is impossible to avoid that a metal composition of a precipitate or a powder formed during hydrolysis, neutralization, precipitation or the like becomes heterogeneous even if that of a solution is homogeneous. This is because a hydrolysis reaction rate, a solubility product and the like is different on each metal compound. It is conceivable that fluorescent characteristics of composite oxide or aluminate phosphor is affected not a little by such a heterogeneousness of metal composition.

EP 1 357 162 A1 describes a process for producing a metal oxide phosphor comprising a step of firing a powder containing an organic metal chelate complex including a plurality of metals constituting the metal oxide at a uniform composition, and further discloses SrAl₂O₄: Eu²⁺ as the only metal oxide phosphor consisting of Sr, Eu, Al and O.

EP 1 385 215 A2 describes a fabrication method of a nitride semiconductor device comprising a nitride semiconductor (InₓAl_{y}Ga_{1-x-y}N, 0≤x, 0≤y, x+y≤1), such as a light-emitting diode (LED), a laser diode (LD), light receiving devices such as a solar cell, or a photosensor, or electronic devices such as a transistor, a power device, and the like.

The present invention was completed under such circumstances. It is an object of the present invention to develop a novel UV-excited aluminate phosphor having a homogeneous composition and capable of emitting a high-level fluorescence. A phosphor of the present invention comprises aluminate which has been ascertained to emit fluorescence by UV excitation, and another metal component which is combined or doped to aluminate. Another object is to provide a method for producing such a phosphor efficiently.

An aluminate phosphor of the present invention which has solved the aforementioned problems successfully is represented by a general composition formula: 7(Sr₁₋ₓEuₓ)OyAl₂O₃, wherein 0<x≤0.5 and Y=6. This phosphor has a specific emission characteristic to emit blue light having a maximum peak wavelength at about 410 nm by UV excitation. Among the phosphor of the general composition formula provided above, particularly preferred is an aluminate phosphor of 0.001<x≤0.3 in the general composition formula.

A producing method of the present invention is useful for manufacturing the aluminate phosphor of the general composition formula mentioned above, and is characterized by carrying out the following step (1) to the step (3) in order:
(1) a step of producing a powder of organic metal chelate complexes including Sr, Eu and Al as metal components,
(2) a step of firing the powder obtained in the step (1) to obtain a multi metal oxide, and
(3) a step of reducing the multi metal oxide obtained in the step (2), wherein the reducing treatment is carried out at about 1400°C in the step (3).

When the producing method of the present invention is practiced, in the step (1), mixing the metals mentioned above or compounds thereof and an organic chelating agent, and/or chelate complexes of the metals so as to be a predetermined metal composition; thereby forming a transparent aqueous solution of organic metal chelate complexes, followed by spray-drying the aqueous solution is preferred. It is possible to obtain an aluminate phosphor precursor having an extremely homogeneous metal composition ratio and a phosphor of substantially spherical fine particles and approximately uniform in particle size by the above method.

As the organic chelating agent used in a practice of this method, a complex consisting of an aminocarboxylic acid-based chelating agent and a metal ion, and/or salt thereof is particularly preferred.

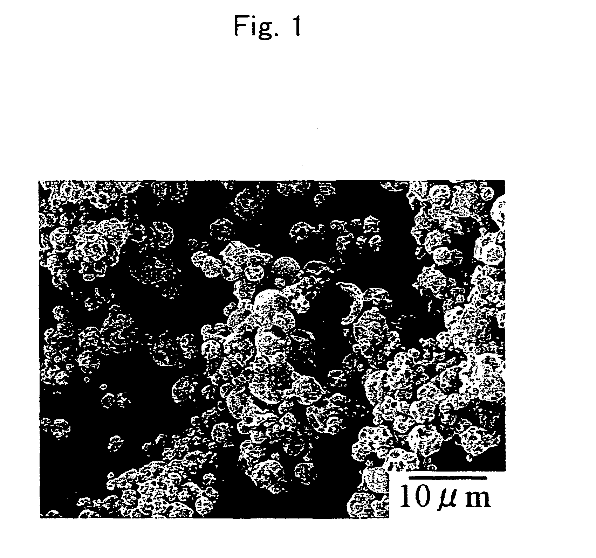

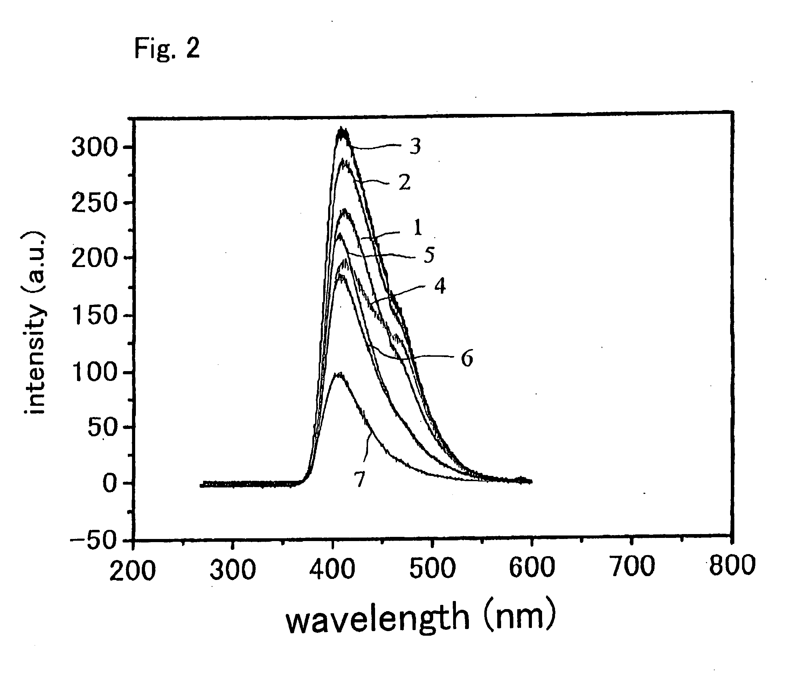

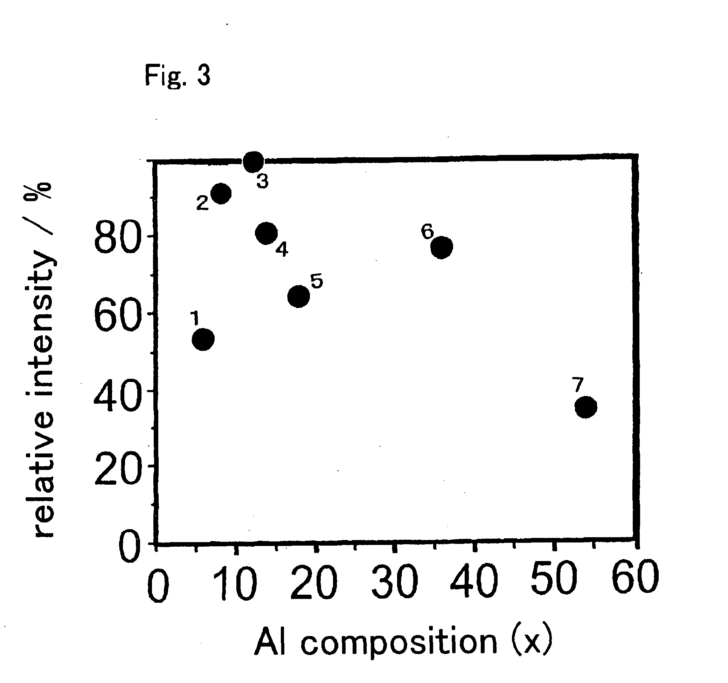

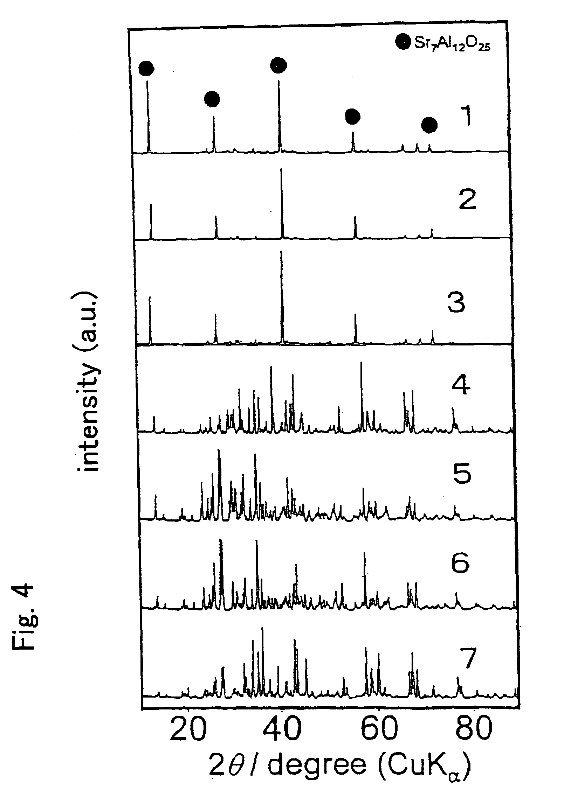

Fig. 1 is a SEM image of a multi metal oxide powder. This powder was prepared by firing (Sr, Al, Eu)-EDTA complexes disclosed in the Examples at 800°C for 3 hours. Fig. 2 is an emission spectrum chart obtained when a phosphor film produced in the Examples was irradiated with UV rays of wavelength of 260 nm. Fig. 3 is a diagram showing the relationship between an emission intensity when a phosphor film produced in the Examples is irradiated with UV rays of wavelength of 260 nm and an Al composition (x). Fig. 4 is an X-ray diffraction chart of a phosphor film produced in the Examples.

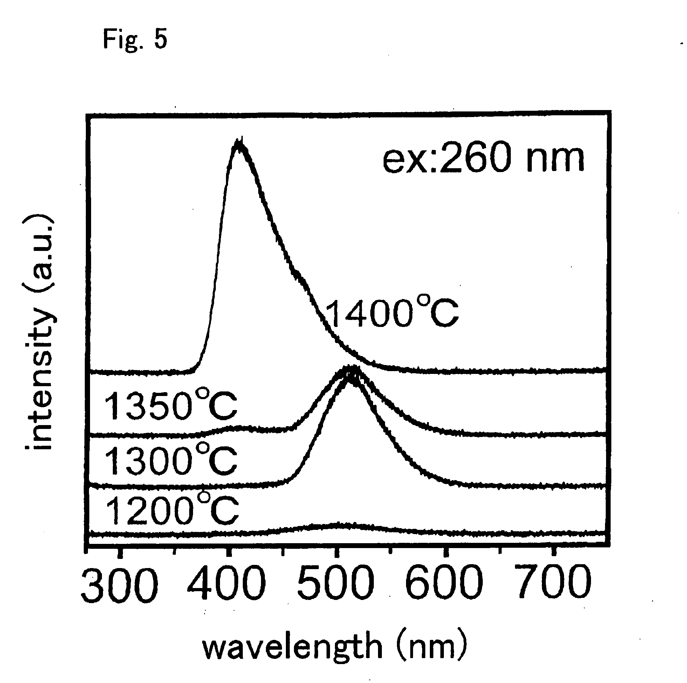

Fig. 5 shows an emission spectra obtained when a phosphor film is irradiated with UV rays of wavelength of 260 nm. The phosphor film was prepared by dropping a multi metal oxide powder disclosed in the Examples on a multicrystalline alumina substrate, followed by drying and subsequently reducing under a flow of Ar+H₂ (3.8%) for 24 hours at 1200°C, 1300°C, 1350°C, or 1400°C.

An UV-excited europium-activated strontium aluminate phosphor of the present invention is an aluminate phosphor represented by a general composition formula: 7(Sr₁₋ₓEuₓ)O.yAl₂O₃, wherein the amount x of Eu doped to Sr is within a range of 0<x≤0.5, and the proportion y of Al₂O₃ is Y=6.

The range of the amount x of Eu doped is limited to 0<x≤0.5. When x is zero (0), in other words, no Eu is doped, an emission center is not formed and no emission occurs. When the amount of Eu doped is too much and the value of x exceeds 0.5, concentration quenching occurs and brightness of emission is diminished remarkably. For this reason, the value of x is defined as mentioned above in the present invention. A more preferable range of the x is a range of 0.001≤x≤0.3. In this range, the highest luminescent characteristics are demonstrated.

Generally, if the proportion y of Al₂O₃ is less than 1, a function as a phosphor is diminished and fluorescent emission does not occur enough. If y is over 36, fluorescent characteristics are not exhibited enough. For this reason, the value of y is defined to be as mentioned above in the present invention. When the value of y is 6, a phosphor is Sr₇₍₁₋ₓ₎Eu₇ₓAl₁₂O₂₅ with a single phase as will be shown clearly in the Examples in a later section, which exhibits the highest luminescent characteristics.

The phosphor of the present invention satisfies the composition formula provided above and, therefore, it emits blue light having a maximum peak wavelength at about 410 nm by UV excitation. Especially it emits high-brightness fluorescence having a peak emission wavelength at about 410 nm, and its fluorescent lifetime is very short. This is in contrast to the strontium-aluminate-type phosphorescent material disclosed in the aforementioned prior art references, which have very long fluorescent lifetimes, in other words, which exhibit afterglow. The phosphor of the present invention has a metal composition ratio and a structure clearly different from those of the strontium-aluminate-type phosphorescent materials disclosed in the aforementioned prior art references, and therefore, these should be classified into different types of phosphor.

According to an X-ray diffraction analysis, as shown clearly in the Examples in a later section, the europium-activated strontium aluminate phosphor of the present invention wherein the y is 6 has a specific peak assigned to strontium aluminate "7SrO.6Al₂O₃", namely "Sr₇Al₁₂O₂₅". It comes to show many diffraction peaks as the y varies away from 6 (see Fig. 4 shown later). From this fact, it is considered that the aluminate phosphor of the present invention is consisted of a single phase rather than a plurality of phases. But there is quite a possibility that a plurality of phases are present together.

Although a method for producing the UV-excited europium-activated strontium aluminate phosphor of the present invention is not particularly restricted, it is possible to obtain the UV-excited europium-activated strontium aluminate phosphor more easily by using a powder of organic metal chelate complexes, as a precursor, in which metal components of Sr, Al and Eu are mixed homogeneously at a molecular level.

The organic metal chelate complexes serving as a precursor can be obtained easily by mixing metal compounds and an organic chelating agent so as to be a predetermined metal composition ratio, thereby forming a transparent aqueous solution of organic metal chelate complexes, followed by drying the aqueous solution using, for example, spray-drying.

For prevention of thermal decomposition during the drying process, preferably used as the organic chelating agent is an aminocarboxylic acid chelating agent which does not thermally decompose at temperatures of about 200°C or lower.

In a preparation of an aqueous solution containing multi-element metal chelate complexes including Sr, Al and Eu as metal components, it is recommended to form a transparent aqueous solution by adding a chelating agent in the amount not less than the equivalent of the metals so that all the metal components form a complex completely. If part of the metal components precipitate as an insoluble compound during the preparation of the aqueous chelate complexes solution, a homogeneousness of the solution will be lost on the whole. In this case, it will become impossible to obtain a precursor powder in which the metal components are mixed homogeneously at a molecular level even if drying is conducted in any way. However, if a transparent chelate complexes solution in a complete dissolution state is prepared at this time, it is possible to easily obtain a powder of organic metal chelate complexes in which metal components are mixed homogeneously at a molecular level by spray-drying the solution.

The powder of chelate complexes is obtained as an amorphous powder, having a homogeneous composition at a molecular level, and having a substantially spherical appearance, and being approximately uniform in particle size. In addition, as shown clearly in the Examples in a later section, it is possible to obtain an aluminate phosphor powder having a substantially spherical shape and being approximately uniform in particle size. In this method for preparing the aluminate phosphor powder, a firing temperature can be remarkably lower than that used in a conventional method for preparing a multi metal oxide phosphor or an aluminate phosphor (see Fig. 1 shown later).

In other words, the above-mentioned organic metal chelate complexes mixed three kinds of metal components homogeneously at a molecular level is an amorphous powder, and the organic metal complexes can be converted into a multi metal oxide by firing at a relatively low temperature in comparison to that used in conventional methods mentioned above (for example, a temperature is about 100°C to 250°C lower than that used in conventional methods). The resulting powder is substantially spherical and approximately uniform in particle size and has a very highly controlled composition due to the precursor material of the organic metal chelate complexes mixed homogeneously at a molecular level.

The organic metal chelate complexes mixed homogeneously at a molecular level, which is used in the present invention, shows a halo pattern caused by a scattering of incident X-rays and has non-crystalline structure. When the organic metal chelate complexes are instantaneously dried by spray-drying from a liquid phase, which is a homogeneous phase, it turns to a solid phase while the homogeneous phase is maintained. Thus, even if the organic metal chelate complexes are multi-element organic metal chelate complexes, it turns into a material which comprises complexes mixed homogeneously at a molecular level and which is non-crystalline where the molecules are agglomerated without taking a crystalline structure (in a microscopic view, although it is general that differences of a regularity remaining in a structure are seen, such regularity is negligibly small, and therefore the resulting material is obviously distinguished from a crystalline complex).

Since the powder of the organic metal chelate complexes has a substantially spherical shape and is approximately uniform in particle size, firing this powder yields an aluminate phosphor that almost maintained its shape and particle size before the firing. Therefore, when a powdering condition used in the spray-drying is controlled properly, and a shape and particle size of the amorphous powder composed of the precursor multi metal chelate complexes is adjusted, it is possible to adjust a shape, particle size, and particle size distribution of the resulting aluminate phosphor powder at will.

The UV-excited europium-activated strontium aluminate phosphor produced from the amorphous powder can be used in various applications where UV rays are used as an excitation source because it has a substantially spherical shape and has no directionality as mentioned above. In particular, it is very suitable for a violet to blue-green phosphor used in three-wavelength fluorescent lamps, plasma displays, or the like.

The method for producing the UV-excited europium-activated strontium aluminate phosphor is described in more detail.
(1) In producing a phosphor of the present invention, a powder including organic metal chelate complexes of Sr, Eu and Al is prepared first. This preparation is conducted in the following manner, for example. First, Sr and Eu are weighed out precisely so as to be a predetermined composition. Then Sr and Eu are allowed to react with an organic chelating agent, yielding a transparent aqueous solution containing organic metal chelate complexes. The reaction is carried out in an aqueous medium at a temperature, for example, from 20°C to a boiling point, preferably in a range from 50°C to 70°C. The concentration of the solution is preferably 5 mass % or more and 30 mass % or less, more preferably 10 mass % or more and 20 mass % or less. However, the conditions are not limited to such temperature or concentration ranges.

The amount of the organic chelating agent to be used is preferably equimolar to the metal ions, and more preferably 1.0 molar time or more and 1.5 molar times or less the metal ions. In the case that the metal chelate complexes or the organic chelating agent do not dissolve completely, it is recommended to dissolve them completely by adding ammonia, amine or the like. In another possible way, the organic metal chelate complexes of the metals are prepared separately, weighed out precisely and mixed so as to be a predetermined metal ratio.

Carbonates, nitrates, hydroxides and oxides can be used as metal sources. In the present invention, strontium and europium are preferred particularly to be used as oxides and carbonates, which are of high reactivity and which do not leave unwanted ions or the like after a reaction. Regarding aluminum, taking into consideration the reactivity with chelating agents, usable raw materials are limited substantially to chlorides, sulfates and nitrates, and preferably nitrates. It is particularly preferable to prepare an aluminum chelate complex solution first by use of chloride, sulfate or nitrate, then produce high purity aluminum chelate complex crystals by crystallization, and use the crystals as an aluminum source.

The biggest problem in producing an aluminate phosphor is a contamination of impurity elements. If sodium salt or potassium salt of organic metal chelate complexes are used, such salts remain in the phosphor after thermal decomposition, and cause to change a composition of the phosphor. Accordingly, such salts should not be used. Inorganic acids containing chlorine, sulfur, phosphorus or the like, inorganic acid salts thereof (such as hydrochloric acid, sulfuric acid, phosphoric acid, or salts thereof), and organic substances (such as thiol compounds) are thermally decomposed in a firing process. However, it is desirable to use such acids, salts and organic substances as little as possible, because such acids, salts and organic substances may affect the production of a multi metal chelate complex with a homogeneous composition.

Examples of a chelating agent used in the present invention include aminocarboxylic acid-based water-soluble chelating agents such as ethylenediaminetetraacetic acid, 1,2-cyclohexanediaminetetraacetic acid, dihydroxyethylglycine, diaminopropanoltetraacetic acid, diethylenetriaminepentaacetic acid, ethylenediaminediacetic acid, ethylenediaminedipropionic acid, hydroxyethylenediaminetriacetic acid, glycoletherdiaminetetraacetic acid, hexamethylenediaminetetraacetic acid, ethylenediaminedi(o-hydroxyphenyl)acetic acid, hydroxyethyliminodiacetic acid, iminodiacetic acid, 1,3-diaminopropanetetraacetic acid, 1,2-diaminopropanetetraacetic acid, nitrilotriacetic acid, nitrilotripropionic acid, triethylenetetraminehexaacetic acid, ethylenediaminedisuccinic acid, 1,3-diaminopropanedisuccinic acid, glutamic acid-N,N-diacetic acid and aspartic acid-N,N-diacetic acid. Any of monomers, oligomers and polymers thereof may be used.

A preferable chelating agent to be used is a free acid type, ammonium salt thereof, or amine salt thereof. It is desirable to select the most suitable one for each metal component to be used by considering a chelate formation constant with each metal, stability of a chelate complex and solubility of a chelate complex in water or alkaline aqueous solution.

The prepared aqueous solution containing the organic metal chelate complexes is powdered by spray-drying. Conditions of the spray-drying may be properly determined on the basis of a concentration of the solution, a processing rate of the solution, the amount of gas sprayed, the amount of hot air, or the like. The upper limit of a drying temperature preferably is a temperature at which an organic substance does not thermally decompose. A recommended temperature is where the solution is dried enough. From such a point of view, a preferred drying temperature range is approximately from 100°C to 200°C, and more typically from 140°C to 180°C. Considering such drying temperature, it is desirable to select a chelating agent that does not thermally decompose at a temperature of about 200°C or lower. In the present invention, an aminocarboxylic acid-based chelating agent is used.
(2) The powder obtained in the step (1) is converted into a metal oxide powder by tiring.

Conditions preferred in this operation are as follows:
When the amorphous powder obtained in the step (1) is fired without being processed beforehand, an organic component is thermally decomposed and the amorphous powder is converted into a composite oxide powder. What is required of the firing is only that an organic component is decomposed completely. For example, when the amorphous powder is fired at a temperature of 500°C or higher, all organic components are decomposed away and a multi metal oxide remains. Raising a firing temperature improves a crystallinity of the multi metal oxide. Therefore, it is possible to fire the amorphous powder at temperatures up to 1500°C, as required. It is not necessary to conduct the firing or the heat treatment in the air.
The firing or the heat treatment may be conducted in an oxygen-rich atmosphere, a neutral atmosphere or a reducing atmosphere according to needs.
(3) The multi metal oxide powder is then subjected to reducing treatment to reduce europium to divalent, and thereby is converted to the UV-excited europium-activated strontium aluminate phosphor. The reducing treatment is conducted by heating the precursor powder in a reducing atmosphere. Generally, a heating temperature ranges from 500°C to 1600°C, or from 1000°C to 1500°C. As shown clearly in the Examples in a later section, when the heat treatment is carried out in a reducing atmosphere at about 1400°C (approximately 1400°C±10°C), it is possible to obtain a very strong fluorescence having a peak emission wavelength at about 410 nm (see, Fig. 5). Although the reducing atmosphere is not particularly restricted, mixed atmosphere of argon and hydrogen or nitrogen and hydrogen is preferred.

The step (2) and the step (3) may be carried out in different furnaces. It is also possible to carry out the step (2) and the step (3) continuously in one furnace by changing a firing atmosphere and temperature. Treating the multi metal oxide powder obtained in the step (2) directly in the step (3) yields a powdery phosphor. On the other hand, when the multi metal oxide powder obtained in the step (2) is applied onto a heat-resistant substrate to form a thin film, and then is subjected to the treatment in the step (3), it is possible to produce a phosphor film.

According to the present invention as described above, it is possible to provide a novel UV-excited europium-activated strontium aluminate phosphor represented by a general composition formula: 7(Sr₁₋ₓEuₓ)O.yAl₂O₃, wherein 0<x≤0.5 and Y=6. The aluminate phosphor of the present invention emits blue light having a maximum peak wavelength at about 410 nm by UV excitation in a wide strontium/aluminum composition range. In addition, according to the producing method of the present invention described above, it is possible to produce the phosphor with a homogeneous composition at a molecular level efficiently and certainly. The phosphor of the present invention is produced by using, as a raw material, a powder including organic metal chelate complexes mixed homogeneously at a molecular level.

As described above, the powder of the organic metal chelate complexes used in the practice of the present invention is produced by mixing metals as raw materials and an organic chelating agent so as to be a predetermined metal composition, thereby forming a transparent aqueous solution containing organic metal chelate complexes, and then drying the aqueous solution. For the drying in this process, spray-drying is preferable. This is because the spray-drying can dry a solution instantaneously while maintaining a homogeneous phase of a liquid phase state, and it is possible to easily obtain substantially spherical fine particles which are approximately uniform in particle size. As the organic chelating agent to be used in the invention, an aminocarboxylic acid-based chelating agent is preferably used.

The UV-excited europium-activated strontium aluminate phosphor of the present invention is applied to what uses UV rays as an excitation source. In particular, the phosphor of the invention can be used effectively as a violet to blue-green emitting phosphor to be used in three-wavelength fluorescent lamps, plasma displays, or the like.

### EXAMPLES

Hereinafter, the present invention will be described in detail by Examples, but the following Examples do not limit the present invention, and modifications which do not depart from the spirit and the scope of the present invention are included in the present invention.

### Example 1

Into a 1-liter beaker, 217 g of ethylenediaminetetraacetic acid and water were added to an overall amount of 500 g, and then 100 g of aqueous ammonia was added and dissolved. While the solution was stirred, 110 g of strontium carbonate was added slowly and was dissolved completely by heating up to 100°C, and the mixture was stirred for two hours. The concentration of the resulting solution was adjusted by addition of water, and a colorless transparent aqueous solution of strontium-ethylenediaminetetraacetic acid (Sr-EDTA) complex was obtained.

Separately, into a 100-ml beaker, 0.65 g of ethylenediaminetetraacetic acid and water were added to an overall amount of 100 g and then 0.3 g of aqueous ammonia was added and dissolved. While the solution was stirred, 0.4 g of europium oxide was added and the mixture was stirred at 80°C for 30 minutes. The europium oxide was dissolved completely and a solution of europium-ethylenediaminetetraacetic acid (Eu-EDTA) was obtained.

The Sr-EDTA complex solution (Sr content: 4.41 mass %), the Eu-EDTA complex solution (Eu content: 0.440 mass %) and ethylenediaminetetraacetic acid aluminum ammonium (EDTA.Al.NH₄) (Al content: 7.13 mass %) were weighed out precisely as shown in the following

Table 1 and placed in a 100-ml beaker. Then water was added to an overall amount of 100 g. The solution was stirred for 30 minutes to achieve complete dissolution. A colorless transparent aqueous solution of (Sr, Al, Eu)-EDTA complexes having a metal component composition of (Sr+Eu)/Al in the range of 7/6 to 7/54 and Eu/Sr of 0.02/0.98 was yielded. The solution was powdered by spray-drying at a drying temperature of 160°C, and a powder of (Sr, Al, Eu)-EDTA complexes was obtained. An X-ray diffraction chart of this powder was examined. A halo pattern caused by a scattering of incident X-rays appeared, which shows that a crystal structure of the powder was amorphous (non-crystalline).

The complex powder was pre-fired at 800°C for 3 hours in an air-releasable electric furnace to remove organic substances. Thus, a multi metal oxide powder was obtained. Fig. 1 is a SEM image of the powder, and it can be confirmed that the powder is approximately uniform in particle size and has a substantially spherical shape. 0.01 g of the resulting multi metal oxide powder was dispersed in ethanol. The ethanol solution of multi metal oxide was dropped on a multicrystalline alumina substrate sized 10 mm x 10 mm, was dried, and further was reduced under a flow of Ar+H₂ (3.8%) at 1400°C for 24 hours to obtain a phosphor film.

The phosphor film was excited by UV at 260 nm. An emission spectrum of the phosphor film is shown in Fig. 2 (in the chart, numerals indicate experiment numbers). The emission intensity measured when UV rays of wavelength of 260 nm was irradiated is shown in Fig. 3 (in the chart, numerals indicate experiment numbers). These charts clearly show that a high-brightness fluorescence in a region from violet to blue is emitted in the (Eu+Sr)/Al range of 7/6 to 7/54. Especially, the highest brightness is demonstrated at (Eu+Sr)/Al of 7/12.

Fig. 4 shows X-ray diffraction patterns of the phosphor obtained in each experiment. This chart confirms that a single phase of Sr₇Al₁₂O₂₅ was obtained in the phosphor having a (Eu+Sr)/Al of 7/12 which demonstrated the highest brightness. Table 2 shows emission peak wavelengths of the phosphor films obtained above. It is ascertained that they are blue phosphor having a peak wavelength at about 410 nm.

**TABLE 1**

| Experiment No. | (Sr+Eu)/Al | Eu/Sr | Sr-EDTA complex solution (g) | EDTA-aluminum ammonium (g) | Eu-EDTA complex solution (g) |
|---|---|---|---|---|---|
| 1 | 7/6 | 0.02/0.98 | 41.883 | 6.983 | 14.865 |
| 2 | 7/8 | 0.02/0.98 | 36.852 | 8.193 | 13.080 |
| 3 | 7/12 | 0.02/0.98 | 29.715 | 9.909 | 10.546 |
| 4 | 7/14 | 0.02/0.98 | 27.091 | 10.539 | 9.615 |
| 5 | 7/18 | 0.02/0.98 | 23.025 | 11.517 | 8.172 |
| 6 | 7/36 | 0.02/0.98 | 13.743 | 13.749 | 4.878 |
| 7 | 7/54 | 0.02/0.98 | 9.795 | 14.698 | 3.476 |

**TABLE 2**

| Experiment No. | Peak emission wavelength (nm) |
|---|---|
| 1 | 412 |
| 2 | 413 |
| 3 | 412 |
| 4 | 412 |
| 5 | 408 |
| 6 | 406 |
| 7 | 406 |

### Example 2

The solution of (Sr, Al, Eu)-EDTA complexes was dropped on a multicrystalline alumina substrate sized 10 mm x 10 mm, was dried, and further was reduced under a flow of Ar+H₂ (3.8 volume %) at 1200°C, 1300°C, 1350°C or 1400°C for 24 hours to obtain a phosphor film. The complex solution dropped on an alumina substrate was a solution having a (Eu+Sr)/Al of 7/12 (Experiment No. 3 in Table 1) of Example 1. Fig. 5 shows an emission spectrum obtained when the phosphor film was irradiated with UV rays of wavelength of 260 nm. As clear from this chart, a blue-emitting phosphor having a peak wavelength at about 410 nm was obtained when the reducing treatment was carried out at about 1400°C.

The UV-excited europium-activated strontium aluminate phosphor of the present invention represented by the general composition formula shown above emits characteristic fluorescence in a violet to blue-green region by UV excitation. The phosphor of the present invention is very useful as an UV-excited phosphor. In particular, the phosphor of the present invention has a peak emission wavelength at about 410 nm, and has a peak wavelength different from that of a conventional blue-emitting phosphor. According to the producing method of the present invention, it is possible to produce the UV-excited phosphor with the aforesaid characteristics efficiently. It is also possible to obtain the phosphor as a fine powder being homogeneous in metal composition ratio, having a substantially spherical shape, and being approximately uniform in particle size. Thus, it is possible to provide the phosphor which can be used widely in a variety of applications effectively.

## Claims

1. An aluminate phosphor comprising an aluminate represented by a general composition formula: 7(Sr₁₋ₓEuₓ)O.6Al₂O₃, wherein 0<x≤0.5, wherein the aluminate phosphor emits blue light having a maximum peak wavelength at about 410 nm by ultraviolet excitation.

2. The aluminate phosphor according to claim 1, wherein the aluminate phosphor has a single phase.

3. A method for producing an aluminate phosphor according to claim 1 or 2, comprising:
(1) a step of producing a powder of organic metal chelate complexes including Sr, Eu and Al as metal components,
(2) a step of firing the powder obtained in the step (1) to obtain a multi metal oxide,
(3) a step of reducing the multi metal oxide obtained in the step (2), wherein the reducing treatment is carried out at about 1400°C in the step (3).

4. The method according to claim 3, wherein the step (1) comprises mixing the metals or compounds thereof and an organic chelating agent, and/or metal chelate complexes of the metals so as to be a predetermined metal composition; thereby forming a transparent aqueous solution of organic metal chelate complexes; and spray-drying the aqueous solution to obtain a powder.

5. The method according to claim 3 or 4, wherein an aminocarboxylic acid-based chelating agent and/or salt thereof is used as the organic chelating agent.

6. The method according to any one of claims 3 to 5, wherein a complex consisting of an aminocarboxylic acid-based chelating agent and a metal ion, and/or salt thereof is used as the metal chelate complex.

7. The method according to any one of claims 3 to 6, wherein the reducing treatment is carried out in an argon and hydrogen atmosphere or in a nitrogen and hydrogen atmosphere in the step (3).

## Patentansprüche

1. Aluminat-Leuchtstoff, umfassend ein Aluminat, dargestellt durch eine allgemeine Zusammensetzungsformel: 7(Sr₁₋ₓEuₓ)O.6Al₂O₃, wobei 0 < x ≤ 0,5, wobei der Aluminat-Leuchtstoff blaues Licht mit einer maximalen Peak-Wellenlänge von etwa 410 nm durch Ultraviolett-Anregung emittiert.

2. Aluminat-Leuchtstoff nach Anspruch 1, wobei der Aluminat-Leuchtstoff eine Einzelphase aufweist.

3. Verfahren zur Herstellung eines Aluminat-Leuchtstoffs nach Anspruch 1 oder 2, umfassend:
(1) einen Schritt des Herstellens eines Pulvers aus organischen Metallchelatkomplexen, welche Sr, Eu und Al als Metallkomponenten einschließen,
(2) einen Schritt des Brennens des in dem Schritt (1) erhaltenen Pulvers, um ein Mehrfachmetalloxid zu erhalten,
(3) einen Schritt des Reduzierens des Mehrfachmetalloxids, erhalten in dem Schritt (2), wobei die reduzierende Behandlung bei etwa 1400°C in dem Schritt (3) durchgeführt wird.

4. Verfahren nach Anspruch 3, wobei der Schritt (1) das Mischen der Metalle oder von Verbindungen davon und eines organischen Chelatbildners, und/oder von Metallchelatkomplexen der Metalle, um eine vorbestimmte Metallzusammensetzung zu ergeben, wodurch eine transparente wässrige Lösung von organischen Metallchelatkomplexen gebildet wird, und das Sprühtrocknen der wässrigen Lösung, um ein Pulver zu erhalten, umfaßt.

5. Verfahren nach Anspruch 3 oder 4, wobei ein Chelatbildner auf Aminocarbonsäurebasis und/oder ein Salz davon als der organische Chelatbildner verwendet wird.

6. Verfahren nach einem der Ansprüche 3 bis 5, wobei ein Komplex, bestehend aus einem Chelatbildner auf Aminocarbonsäurebasis und einem Metallion, und/oder ein Salz davon, als der Metallchelatkomplex verwendet wird.

7. Verfahren nach einem der Ansprüche 3 bis 6, wobei die reduzierende Behandlung in einer Argon- und Wasserstoffatmosphäre oder in einer Stickstoff- und Wasserstoffatmosphäre in dem Schritt (3) durchgeführt wird.

## Revendications

1. Luminophore d'aluminate comprenant un aluminate représenté par une composition générale de formule : 7(Sr₁₋ₓEuₓ)O.6Al₂O₃, où 0<x≤0,5, où le luminophore d'aluminate émet de la lumière bleue ayant un pic maximal à une longueur d'onde d'environ 410 nm par excitation ultraviolette.

2. Luminophore d'aluminate selon la revendication 1, où le luminophore d'aluminate présente une seule phase.

3. Procédé de production d'un luminophore d'aluminate selon la revendication 1 ou 2, comprenant :
(1) une étape de production d'une poudre de complexes de chélates organo-métalliques comprenant Sr, Eu et Al comme composants métalliques,
(2) une étape de cuisson de la poudre obtenue à l'étape (1) pour obtenir un oxyde multi-métallique,
(3) une étape de réduction de l'oxyde multi-métallique obtenu en (2), où le traitement de réduction est réalisé à environ 1400°C à l'étape (3).

4. Procédé selon la revendication 3, où l'étape (1) comprend le mélange des métaux ou de leurs composés et d'un agent organique de chélation, et/ou les complexes de chélates métalliques des métaux de sorte qu'ils soient présents selon une composition prédéterminée des métaux ; pour ainsi former une solution aqueuse transparente de complexes de chélates métalliques, et le séchage par atomisation de la solution aqueuse pour obtenir une poudre.

5. Procédé selon la revendication 3 ou 4, où un agent de chélation à base d'un acide aminocarboxylique et/ou son sel est utilisé comme agent organique de chélation.

6. Procédé selon l'une quelconque des revendications 3 à 5, où on utilise un complexe consistant en un agent de chélation à base d'acide aminocarboxylique et d'un ion métallique, et/ou son sel, comme complexe de chélates métalliques.

7. Procédé selon l'une quelconque des revendications 3 à 6, où le traitement de réduction de l'étape (3) est réalisé dans une atmosphère d'argon et d'hydrogène ou dans une atmosphère d'azote et d'hydrogène.
